(19) Europäisches Patentamt
European Patent Office
Office européen des brevets

(11) **EP 1 536 211 B1**

(12) **EUROPÄISCHE PATENTSCHRIFT**

(45) Veröffentlichungstag und Bekanntmachung des Hinweises auf die Patenterteilung:
**07.12.2011 Patentblatt 2011/49**

(51) Int Cl.:
***G01F 1/60*** *(2006.01)*

(21) Anmeldenummer: **04021909.9**

(22) Anmeldetag: **15.09.2004**

(54) **Verfahren zum Betreiben eines magnetisch-induktiven Durchflussmessgeräts**

Method for operating a magnetic inductive flowmeter

Procédé pour faire fonctionner un débitmètre magnéto-inductif

(84) Benannte Vertragsstaaten:
**AT BE BG CH CY CZ DE DK EE ES FI FR GB GR HU IE IT LI LU MC NL PL PT RO SE SI SK TR**

(30) Priorität: **27.11.2003 DE 10356007**

(43) Veröffentlichungstag der Anmeldung:
**01.06.2005 Patentblatt 2005/22**

(73) Patentinhaber: **KROHNE MESSTECHNIK GMBH & CO. KG**
**47058 Duisburg (DE)**

(72) Erfinder:
• **Brockhaus, Helmut, Dr.**
**46537 Dinslaken (DE)**

• **Florin, Wilhelm**
**47198 Duisburg (DE)**

(74) Vertreter: **Gesthuysen, von Rohr & Eggert**
**Patentanwälte**
**Postfach 10 13 54**
**45013 Essen (DE)**

(56) Entgegenhaltungen:
**EP-A- 0 336 615        US-A- 5 880 376**
**US-A1- 2003 051 557    US-B1- 6 392 416**

• **PATENT ABSTRACTS OF JAPAN Bd. 009, Nr. 030 (P-333), 8. Februar 1985 (1985-02-08) & JP 59 174718 A (YOKOGAWA HOKUSHIN DENKI KK), 3. Oktober 1984 (1984-10-03)**

**Beschreibung**

Die Erfindung betrifft ein Verfahren zum Betreiben eines magnetisch-induktiven Durchflußmeßgeräts, wobei das Durchflußmeßgerät ein von einem elektrisch leitfähigen Medium durchströmtes Meßrohr, wenigstens zwei mit dem Medium in galvanisch leitendem Kontakt stehende Elektroden und wenigstens eine Magnetspule aufweist, mit der ein das Medium wenigstens teilweise durchsetzendes Magnetfeld erzeugt wird, wobei zwischen zwei mit dem strömenden Medium in benetzendem Kontakt stehenden Elektroden ein vorbestimmter Strom eingeprägt wird, die Spannung gemessen wird, die zwischen den beiden Elektroden oder einer der beiden Elektroden und einer anderen mit dem strömenden Medium in benetzendem Kontakt stehenden Elektrode anliegt, und aus dem Verhältnis von eingeprägtem Strom zu gemessener Spannung ein Widerstandswert ermittelt wird.

Magnetisch-induktive Durchflußmeßgeräte und Verfahren zum Betreiben von magnetisch-induktiven Durchflußmeßgeräten der eingangs genannten Art sind schon seit längerer Zeit gut bekannt und werden vielfältig in unterschiedlichen Einsatzgebieten verwendet. Das grundlegende Prinzip eines magnetisch-induktiven Durchflußmeßgeräts für strömende Medien geht dabei schon auf Faraday zurück, der im Jahre 1832 vorgeschlagen hat, das Prinzip der elektrodynamischen Induktion zur Strömungsgeschwindigkeitsmessung anzuwenden. Nach dem Faraday'schen Induktionsgesetz entsteht in einem strömenden Medium, das Ladungsträger mit sich führt und durch ein Magnetfeld hindurchfließt, eine elektrische Feldstärke senkrecht zur Strömungsrichtung und senkrecht zum Magnetfeld. Das Faraday'sche Induktionsgesetz wird bei einem magnetisch-induktiven Durchflußmeßgerät dadurch ausgenutzt, daß ein Magnet, im allgemeinen bestehend aus zwei Magnetpolen mit je einer Magnetspule, ein Magnetfeld, typischerweise senkrecht zur Strömungsrichtung, in dem Meßrohr erzeugt. Innerhalb dieses Magnetfelds liefert jedes sich durch das Magnetfeld bewegende und eine gewissen Anzahl von Ladungsträgern aufweisende Volumenelement des strömenden Mediums mit der in diesem Volumenelement entstehenden Feldstärke einen Beitrag zu einer über Meßelektroden abgreifbaren Meßspannung.

Die Meßelektroden werden bei den bekannten magnetisch-induktiven Durchflußmeßgeräten derart ausgeführt, daß sie entweder galvanisch oder kapazitiv mit dem strömenden Medium gekoppelt sind. Die vorliegende Erfindung beschäftigt sich dabei mit solchen Durchflußmeßgeräten, bei denen eine galvanische Kopplung der Meßelektroden mit dem strömenden Medium vorliegt. Ein besonderes Merkmal der magnetisch-induktiven Durchflußmeßgeräte ist schließlich die Proportionalität zwischen der Meßspannung und der über den Querschnitt des Meßrohrs gemittelten Strömungsgeschwindigkeit des Mediums, also zwischen Meßspannung und Volumenstrom.

Im eigentlichen Durchflußmeßbetrieb wird bei einem magnetisch-induktiven Durchflußmeßverfahren im allgemeinen das Magnetfeld zeitlich alternierend umgeschaltet. Dazu sind verschiedene Vorgehensweisen bekannt, wie die Verwendung eines Wechselfelds, insbesondere nämlich der Anschluß der Magnetspulen des Magneten direkt an das Stromnetz, so daß es zu einem sinusförmigen 50-Hz-Wechselfeld kommt. Heutzutage wird jedoch zur Vermeidung von transformatorischen Störspannungen und Netzstörspannungen im allgemeinen mit einem geschalteten Gleichfeld gearbeitet. Ein solches geschaltetes Gleichfeld erhält man, indem den Magnetspulen des Magneten ein Strom mit zeitlich rechteckförmigen Verlauf zugeführt wird, der seine Polarität zeitlich alternierend ändert. Möglich ist jedoch auch eine magnetisch-induktive Durchflußmessung mit Hilfe eines pulsierenden Gleichfelds, das dadurch erhalten wird, daß die Magnetspulen des Magneten nur periodenweise mit einem zeitlich rechteckförmigen, immer die gleiche Polarität aufweisenden Strom versorgt werden. Ein Verfahren, bei dem der Feldstrom periodisch umgepolt wird ist jedoch bevorzugt, da durch die Änderung der Polarität des Magnetfelds Störgrößen, wie chemische Störgrößen, unterdrückt werden können.

Die zum Durchfluß proportionale Spannung zwischen den Meßelektroden ist im allgemeinen sehr klein, liegt nämlich im Mikrovolt-Bereich. Diese Spannung muß mit hoher Auflösung (ca. 100 nV) gemessen werden; und die Meßfrequenz liegt bei den bekannten magnetisch-induktiven Durchflußmeßgeräten, die nach dem Prinzip des geschalteten Gleichfelds arbeiten, im Bereich von 1 bis 100 Hz.

Die Möglichkeit einer Durchflußmessung mit Hilfe eines magnetisch-induktiven Durchflußmeßgeräts ist im wesentlichen nur durch die Forderung nach einem hinreichend elektrisch leitfähigen Medium begrenzt. Die Leitfähigkeit des Mediums ist jedoch häufig nicht bekannt. Ein magnetisch-induktives Durchflußmeßgerät, mit dem auf einfache Weise die Leitfähigkeit des durch das Meßrohr strömenden Mediums erfaßbar wäre, würde dem Verwender des magnetisch-induktiven Durchflußmeßgeräts daher einen Zusatznutzen liefern. Ein weiterer Zusatznutzen für den Verwender eines magnetisch-induktiven Durchflußmeßgeräts würde darin liegen, die Leckage einer Elektrode erkennen zu können, also den Zustand, in dem sich Flüssigkeit hinter einer Elektrode, typischerweise der Referenzelektrode am Boden des Meßrohrs, sammelt.

Aus der amerikanischen Patentanmeldung US 2003/051557 A1 ist ein elektromagnetischer Durchflußmesser zur Messung des Volumendurchsatzes von elektrisch leitfähigen Flüssigkeiten, insbesondere ein Durchflußmeßgerät, das eine Leerlaufkennung sowie die Erkennung von isolierendem Material ermöglicht, das an den Meßelektroden anhaftet. Zur Erkennung von Anhaftungen an den Meßelektroden wird dem Medium über eine der Meßelektroden ein konstanter Strom aufgeprägt, der über eine weitere, geerdete Elektrode abfließt, so daß über das Verhältnis von der sich einstellenden Spannung zwischen der betreffenden Meßelektrode und der weiteren geerdeten Elektrode und dem zwischen beiden Elektroden fließenden eingeprägten Strom der Widerstand zwischen den Elektroden ermittelbar ist. Die dazu erforderliche Schaltung ist vergleichsweise aufwendig, da nicht nur die Spannung zwischen den beiden Meßelektroden meßtechnisch erfaßt werden können muß, sondern es muß auch die sich in Folge der Stromeinprägung an jeweils nur einer Elektrode einstellende Spannung gegenüber dem Erdpotential meßtechnisch erfaßbar sein.

Aus der europäischen Patentanmeldung EP 0 336 615 A1 ist ein elektromagnetischer Strömungsmesser bekannt, der fähig ist, die Strömungsrate und die Leitfähigkeit eines Fluids zur gleichen Zeit zu messen. Der Zustand der Meßelektroden wird dabei nicht erfaßt.

Aus der Amerikanischen Patentschrift US 6,392,416 B1 ist die Verifikation der Elektrodenintegrität in einem Meßgerät, insbesondere einem Meßgerät mit einer hohen Eingangsimpedanz, wie beispielsweise bei einem elektromagnetischen Durchflußmeßgerät, einem pH- oder einem Redox-Meßgerät oder einem chemischen oder biochemischen Meßgerät, bekannt. Um zusätzlich während einer anderen Messung des Meßgeräts - also in situ - eine Meßgröße für eine Impedanz zwischen zwei Meßelektroden des Meßgeräts zu erhalten, wird ein Signal mit einer im wesentlichen linearen Spannungsrampe an einen Kondensator angelegt, der mit einer der Meßelektroden verbunden ist, um einen im wesentlichen konstanten Strom zu erzeugen. Bei diesem Strom handelt es sich um einen Verschiebungsstrom, mit dem zunächst der Kondensator aufgeladen wird.

Schließlich ist die japanische Patentschrift JP 59 174718 A bekannt, die ein elektromagnetisches Durchflußmessgerät offenbart, bei dem die Leitfähigkeit des Fluids durch die Messung des Widerstands zwischen den Meßelektroden bestimmt wird und aus der Leitfähigkeit, dem Widerstand zwischen einer der beiden Meßelektroden und der Wandung des Meßrohrs und der Spannung zwischen den Meßelektroden die Durchflußrate des Fluids bestimmt wird.

Es ist die Aufgabe der Erfindung, ein Verfahren zum Betreiben eines magnetisch-induktiven Durchflußmeßgeräts anzugeben, mit dem eine kritische Belegung einer Meßelektrode feststellbar ist.

Die zuvor hergeleitete und aufgezeigte Aufgabe ist ausgehend von dem eingangs beschriebenen Verfahren dadurch gekennzeichnet, dass zwei Elektroden als Meßelektroden vorgesehen sind und eine weitere Elektrode als Referenzelektrode oder als Füllstandsüberwachungselektrode vorgesehen ist, wobei der vorbestimmte Strom zwischen einer Meßelektrode und der weiteren Elektrode eingeprägt, die dabei zwischen den Meßelektroden anliegende Spannung gemessen und aus dem Verhältnis von gemessener Spannung zu eingeprägtem Strom ein erster Widerstandswert ermittelt wird, der vorbestimmte Strom zwischen der anderen Meßelektrode und der weiteren Elektrode eingeprägt, die dabei zwischen den Meßelektroden anliegende Spannung gemessen und aus dem Verhältnis von gemessener Spannung zu eingeprägtem Strom ein zweiter Widerstandswert ermittelt wird, das Verhältnis oder/und die Differenz des ersten Widerstandswertes zu dem zweiten Widerstandswert gebildet wird und eine kritische Belegung einer der beiden Meßelektroden festgestellt wird, wenn das gebildete Verhältnis bzw. die gebildete Differenz außerhalb eines vorbestimmten Wertebereichs liegt.

Bei den Elektroden kann es sich grundsätzlich um beliebige Elektroden des magnetisch-induktiven Durchflußmeßgeräts handeln. Im allgemeinen weist ein magnetisch-induktives Durchflußmeßgerät wenigstens zwei Meßelektroden auf, die einander gegenüberliegen und deren Verbindungslinie sowohl senkrecht zur Durchflußrichtung des Mediums als auch senkrecht zur Magnetfeldrichtung steht. Darüber hinaus können bei einem magnetisch-induktiven Durchflußmeßgerät weitere Elektroden vorgesehen sein, nämlich eine Referenzelektrode, typischerweise am Boden des Meßrohrs, und eine Füllstandsüberwachungselektrode im oberen Wandungsbereich des Meßrohrs. Dabei kann z. B. ein nur teilgefülltes Meßrohrs dadurch detektiert werden, daß der Widerstand zwischen der Referenzelektrode und einer Meßelektrode sehr hoch ist, da das das Meßrohr durchströmende elektrisch leitfähige Medium nicht bis hin zur Füllstandsüberwachungselektrode reicht.

Der erfindungsgemäß aus dem Verhältnis von eingeprägtem Strom zu gemessener Spannung ermittelte Widerstandswert ermöglicht dem Verwender des magnetisch-induktiven Durchflußmeßgeräts verschiedene Zusatznutzen, wie im folgenden im einzelnen ausgeführt.

Gemäß einer bevorzugten Weiterbildung der Erfindung kann vorgesehen sein, daß mit Hilfe des aus dem Verhältnis von eingeprägtem Strom zu gemessener Spannung ermittelten Widerstandswerts die Leitfähigkeit des durch das Meßrohr strömenden Mediums ermittelt wird. Dieser Leitfähigkeitswert für das durch das Meßrohr strömende Medium kann dann in dem magnetisch-induktiven Durchflußmeßgerät weiter verarbeitet werden, und zusätzlich oder alternativ dazu kann eine Ausgabe des Leitfähigkeitswerts an den Verwender erfolgen. Gemäß einer besonders bevorzugten Weiterbildung der Erfindung ist dabei vorgesehen, daß die Leitfähigkeit $K$ des durch das Meßrohr strömenden Mediums mittels der Formel

$$K = c\,\frac{1}{R}$$

bestimmt wird, wobei $c$ eine Konstante und $R$ der mit Hilfe des aus dem Verhältnis von eingeprägtem Strom zu gemessener Spannung ermittelte Widerstandswert ist. Gemäß einer ganz bevorzugten Weiterbildung der Erfindung ist insbesondere, nämlich im Falle einer kreisförmigen Elektrode mit dem Durchmesser $d$, vorgesehen, für die Konstante $c$ den Wert $1/(2d)$ zu verwenden.

Grundsätzlich kann als zwischen den beiden Elektroden eingeprägter Strom ein beliebiger Strom verwendet werden. Insbesondere kann es sich bei dem eingeprägten Strom um einen Wechselstrom oder um einen Strom mit periodisch rechteckförmigem Verlauf handeln. Gemäß einer bevorzugten Weiterbildung der Erfindung kann dabei insbesondere vorgesehen sein, daß die Amplitude des einprägten Stroms 10 μA, vorzugsweise 1 μA, nicht übersteigt.

Weiterhin ist gemäß einer bevorzugten Weiterbildung der Erfindung vorgesehen, daß der eingeprägte Strom eine Frequenz im Bereich von 100 bis 500 Hz aufweist. Dieser bevorzugten Weiterbildung der Erfindung liegt die Beobachtung zugrunde, daß im Frequenzbereich zwischen ca. 100 und ca. 500 Hz der Widerstand einer Elektrode, im übrigen mitbestimmt durch den Übergangsbereich von der Elektrode zum strömenden Medium, der bekanntermaßen durch eine elektrochemische Doppelschicht gebildet wird, frequenzabhängig ist. Die ein galvanisches Element bildende Doppelschicht zeigt nämlich eine derartige Frequenzabhängigkeit, daß der Widerstand außerhalb des Frequenzbereichs von 100 bis 500 Hz mit steigender Frequenz sinkt. Innerhalb des Frequenzbereichs von 100 bis 500 Hz ist der Widerstand jedoch im wesentlichen konstant; es kann das Ohmsche Gesetz angewandt werden.

Die Messung der Spannung relativ zum eingeprägten Strom kann auf verschiedene Weisen erfolgen. Gemäß einer bevorzugten Weiterbildung der Erfindung ist jedoch vorgesehen, daß die Messung der Spannung phasenstarr zum eingeprägten Strom erfolgt. Auf diese Weise können der reelle Widerstandsanteil und der imaginäre Widerstandsanteil unterschieden werden, wobei der Betrag oder der reelle Widerstandsanteil zur Bestimmung des Widerstandswertes herangezogen wird.

Gemäß einer anderen bevorzugten Weiterbildung der Erfindung können zwei Elektroden als Meßelektroden und eine weitere Elektrode als Referenzelektrode oder als Füllstandsüberwachungselektrode vorgesehen sein. Dabei wird dann der vorbestimmte Strom zwischen einer Meßelektrode und der weiteren Elektrode eingeprägt, die zwischen den Meßelektroden anliegende Spannung wird gemessen und als Widerstandswert wird das Verhältnis der zwischen den Meßelektroden anliegenden Spannung zu dem zwischen der Meßelektrode und der weiteren Elektrode eingeprägten Strom verwendet. Es handelt sich damit um eine Dreipunktmessung. Bei diesem als auch bei dem zuvor beschriebenen bevorzugten Ausführungsbeispiel der Erfindung gilt, daß der auf diese Weise gewonnene Widerstandswert z. B. für die Bestimmung der Leitfähigkeit des durch das Meßrohr strömenden Mediums verwendet werden kann, wie weiter oben im Detail ausgeführt.

Sind zwei Elektroden als Meßelektroden und als weitere Elektroden eine Referenzelektrode und eine Füllstandsüberwachungselektrode vorgesehen, so kann gemäß einer weiteren denkbaren, hier nicht beanspruchten Weiterbildung vorgesehen sein, daß der vorbestimmte Strom zwischen einer Meßelektrode und einer weiteren Elektrode eingeprägt, die dabei zwischen den Meßelektroden anliegende Spannung gemessen und aus dem Verhältnis von gemessener Spannung zu eingeprägtem Strom ein erster Widerstandswert ermittelt wird, der vorbestimmte Strom zwischen der anderen Meßelektrode und der weiteren Elektrode eingeprägt, die dabei zwischen den Meßelektroden anliegende Spannung gemessen und aus dem Verhältnis von gemessener Spannung zu eingeprägtem Strom ein zweiter Widerstandswert ermittelt wird, der vorbestimmte Strom zwischen Referenzelektrode und Füllstandsüberwachungselektrode eingeprägt, die dabei zwischen der Referenzelektrode und der Füllstandsüberwachungselektrode anliegende Spannung gemessen und aus dem Verhältnis von gemessener Spannung zu eingeprägtem Strom ein dritter Widerstandswert ermittelt wird und ein kritischer Zustand festgestellt wird, wenn der dritte Widerstandswert um mehr als einen vorbestimmten Betrag von der Summe aus dem ersten Widerstandswert und dem zweiten Widerstandswert abweicht.

Insbesondere ist auf diese Weise gemäß weiteren denkbaren, hier nicht beanspruchten Weiterbildung der Erfindung auch eine Leckage der Referenzelektrode feststellbar. Eine solche Leckage der Referenzelektrode wird bei dieser denkbaren Weiterbildung der Erfindung nämlich dadurch festgestellt, daß der dritte Widerstandswert um mehr als einen vorbestimmten Betrag kleiner ist als die Summe aus dem ersten Widerstandswert und dem zweiten Widerstandswert. Entsprechendes tritt nämlich auf, wenn sich Medium hinter der Referenzelektrode aufgrund einer Leckage gesammelt hat. Damit wird der Widerstand der Referenzelektrode kleiner als erwartet, da sich die Oberfläche vergrößert. Insbesondere ist gemäß einer denkbaren Weiterbildung der Erfindung dann auch vorgesehen, daß eine Statusausgabe "Leckage" ausgegeben wird. Weiterhin gilt hier, wie auch für alle anderen beschriebenen Ausgaben von Werten oder Hinweisen, daß diese auch über eine lokale Anzeige am magnetisch-induktiven Durchflußmeßgerät oder/und über eine digitale Schnittstelle des Durchflußmeßgeräts ausgegeben werden können.

Die ermittelten Widerstandswerte können zeitlich auf verschiedene Weise ermittelt werden. Gemäß einer bevorzugten Weiterbildung der Erfindung ist jedoch vorgesehen, daß bei der Ermittelung mehrerer Widerstandswerte diese zeitlich nacheinander ermittelt werden. Die Widerstandswerte können dabei direkt ohne weitere Bearbeitung verwendet werden. Gemäß einer bevorzugten Weiterbildung der Erfindung ist jedoch grundsätzlich vorgesehen, daß für e-den Widerstandswert eine zeitliche Mitteilung oder/und eine Tiefpaßfilterung durchgeführt wird.

Die Bestimmung der Widerstandswerte kann grundsätzlich während der Durchflußmessung erfolgen. Gemäß einer bevorzugten Weiterbildung der Erfindung ist jedoch vorgesehen, daß während der Bestimmung der Widerstandswerte keine Durchflußmessung erfolgt. Insbesondere kann bei der Verwendung eines Magnetfelds in Form eines Wechselfelds oder eines geschalteten Gleichfelds die Bestimmung der Widerstandswerte in den Umschaltphasen des Magnetfelds erfolgen.

Grundsätzlich kann das erfindungsgemäße Verfahren zum Betrieb eines magnetisch-induktiven Durchflußmeßgeräts mit jedem magnetisch-induktiven Durchflußmeßgerät durchgeführt werden, das die entsprechenden Elektroden aufweist und die Einprägung eines entsprechendes Stroms sowie die Messung der entsprechenden Spannung zuläßt. Was die Abschirmungen der Zuleitungen zu den Elektroden angeht, ist jedoch gemäß einer bevorzugten Weiterbildung der Erfindung vorgesehen, daß diese Abschirmungen der Zuleitungen zu den Elektroden elektrisch mit dem Potential der jeweiligen Elektroden mitgeführt werden, um den Einfluß von Kabelkapazitäten zu reduzieren.

Im einzelnen gibt es nun eine Vielzahl von Möglichkeiten, das erfindungsgemäße Verfahren zum Betreiben eines magnetisch-induktiven Durchflußmeßgeräts auszugestalten und weiterzubilden. Dazu wird auf die dem Patentanspruch 1 nachgeordneten Patentansprüche sowie auf die nachfolgende Beschreibung bevorzugter Ausführungsbeispiele der Erfindung unter Bezugnahme auf die Zeichnung verwiesen. In der Zeichnung zeigt

Fig. 1    schematisch ein magnetisch-induktives Durchflußmeßgerät zur Verwendung mit dem erfindungsgemäßen Verfahren und

Fig. 2    die Abhängigkeit des Elektrodenwiderstands von der Frequenz des eingeprägten Stroms.

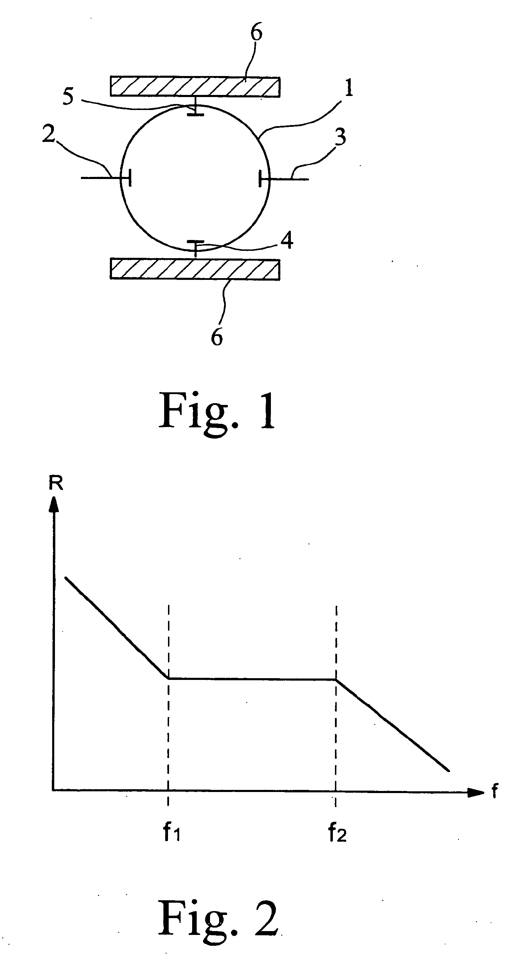

Aus Fig. 1 ist schematisch ein magnetisch-induktives Durchflußmeßgerät zur Verwendung mit dem erfindungsgemäßen Verfahren ersichtlich. Das magnetisch-induktive Durchflußmeßgerät weist ein Meßrohr 1, zwei Meßelektroden 2, 3, eine Referenzelektrode 4 und eine Füllstandsüberwachungselektrode 5 auf. Zur Erzeugung eines das Meßrohr 1 durchsetzenden Magnetfelds ist ferner ein Magnet mit zwei Magnetspulen 6 vorgesehen.

Wird nun ein Strom $I$ von einer Elektrode 2, 3, 4, 5 zu einer anderen Elektrode 2, 3, 4, 5 eingeprägt und wird der Spannungsabfall $U$ zwischen zwei Elektroden 2, 3, 4, 5 gemessen, so kann über das Ohmsche Gesetz der Widerstand $R$ der beteiligten Elektroden bestimmt werden:

$$R = \frac{U}{I}.$$

Wie weiter oben schon angesprochen, wird der Übergang von einer Elektrode 2, 3, 4, 5 zu dem Medium durch eine elektrochemische Doppelschicht gebildet. Diese ist als galvanisches Element sehr empfindlich, abhängig vom Stromfluß, und ihr Widerstand ist insbesondere frequenzabhängig. Es ist nämlich festgestellt worden, daß der Frequenzverlauf des Elektrodenwiderstandes im Prinzip so aussieht, wie in Fig. 2 dargestellt. Im Bereich $f_1 < f < f_2$ ist der Elektrodenwiderstand rein ohmsch. Für kreisförmige Elektroden 2, 3, 4, 5 gilt in diesem Bereich in etwa

$$K = \frac{1}{2dR},$$

wobei $K$ die Leitfähigkeit des durch das Meßrohr 1 strömenden Mediums, $R$ der Elektrodenwiderstand und $d$ der Elektrodendurchmesser ist.

Diese Feststellung der Abhängigkeit des Elektrodenwiderstands von der Frequenz des eingeprägten Stroms ist der Grund dafür, den Frequenzbereich zwischen $f_1$ und $f_2$ nicht zu verlassen. In der Praxis hat sich im übrigen herausgestellt, daß die untere bzw. die obere Grenze des effektiv nutzbaren Frequenzbereichs bei ca. 100 Hz bzw. bei ca. 500 Hz liegt.

Den hier beschriebenen Verfahren liegt grundsätzlich folgende Vorgehensweise zugrunde: Zwischen zwei Elektroden 2, 3, 4, 5 wird ein vorbestimmter Strom eingeprägt. Welche Elektroden dies im einzelnen sein können und was damit genau erzielt werden kann, wird weiter unten im einzelnen ausgeführt. Bei diesem eingeprägten Strom handelt es sich z. B. um einen alternierenden Strom mit rechteckförmigem Verlauf und einer Frequenz zwischen 100 Hz und 500 Hz, um bei der nachfolgenden Bestimmung des Elektrodenwiderstands auf einen im wesentlichen rein ohmschen Widerstand zurückgreifen zu können, wie zuvor ausgeführt.

Weiterhin wird zwischen zwei Elektroden 2, 3, 4, 5 die aufgrund des eingeprägten Stroms generierte Spannung gemessen, wobei es sich bei den Elektroden 2, 3, 4, 5 einerseits um genau die beiden Elektroden handeln kann, zwischen denen auch der vorbestimmte Strom eingeprägt worden ist. Es handelt sich dann um eine Zweipunktmessung. Andererseits wird erfindungsgemäß die Spannung auch zwischen nur einer der beiden Elektroden, zwischen denen der Strom eingeprägt wird, und einer Elektrode 2, 3, 4, 5 gemessen werden. Schließlich wird aus dem Verhältnis von eingeprägtem Strom zu gemessener Spannung ein Widerstandswert ermittelt. Mit Hilfe dieses Widerstandswerts ist z. B. die Leitfähigkeit des durch das Meßrohr strömenden Mediums ermittelbar, nämlich wie oben ausgeführt, im Falle von kreisförmigen Elektroden 2, 3, 4, 5 mit Hilfe der Formel $K = 1(2dR)$. Die derart bestimmte Leitfähigkeit kann dann neben dem Durchfluß als zusätzlicher Meßwert ausgegeben werden, was dem Verwender des magnetisch-induktiven Durchflußmeßgeräts einen Zusatznutzen liefert.

Der Elektrodenwiderstand kann nun auf verschiedene Arten bestimmt werden: So kann der Strom zwischen einer Meßelektrode 2, 3 und der Referenzelektrode 4 eingeprägt werden, wobei die Spannung zwischen den beiden Meßelektroden 2, 3 gemessen wird. Es handelt sich dann um eine Dreipunktmessung, wobei nur der Widerstand einer Meßelektrode 2, 3, also nur der Widerstand der Meßelektrode 2 alleine oder der Widerstand der Meßelektrode 3 alleine bestimmt wird. Bei der oben auch schon angesprochenen Zweipunktmessung, also z. B. dem Einprägen eines Stroms zwischen den beiden Meßelektroden 2, 3 und der Messung der Spannung ebenfalls zwischen den Meßelektroden 2, 3, ergibt sich als Widerstandswert die Summe aus den Widerstandswerten für die Meßelektrode 2 einerseits und die Meßelektrode 3 andererseits.

Alternativ zur Erfindung kann der vorbestimmte Strom auch zwischen Referenzelektrode 4 und Füllstandsüberwachungselektrode 5 eingeprägt werden, wobei dann auch die Spannung zwischen der Referenzelektrode 4 und der Füllstandsüberwachungselektrode 5 gemessen wird. Als Widerstandswert aus dem Verhältnis von gemessener Spannung zu eingeprägtem Strom ergibt sich dann die Summe der Widerstandswerte für die Referenzelektrode 4 einerseits und die Füllstandsüberwachungselektrode 5 andererseits. Auch dies entspricht wieder einer Zweipunktmessung.

Wenn alle Elektroden von der Bauart her gleich sind, so gilt, daß die bei den Zweipunktmessungen ermittelten Widerstandswerte genau doppelt so groß sein sollen wie die bei den Dreipunktmessungen ermittelten Meßwerte, im übrigen bei Zweipunktmessungen einerseits und Dreipunktmessungen andererseits ermittelten Widerstandswerte immer gleich sein sollten.

Da bei magnetisch-induktiven Durchflußmeßgeräten immer die Meßelektroden 2, 3 vorhanden sind, kann die Leitfähigkeit des durch das Meßrohr 1 strömenden Mediums immer aus einer der beiden nachfolgenden Formeln bestimmt werden:

$$K = \frac{1}{2d\frac{1}{2}(R_2 + R_3)}$$

$$K = \frac{1}{2d\frac{1}{2}R_{23}},$$

wobei weiterhin $K$ die Leitfähigkeit des durch das Meßrohr 1 strömenden Mediums und $d$ der Durchmesser der Elektroden 2, 3, 4, 5 ist sowie $R_2$ der Widerstandswert

für die Meßelektrode 2, $R_3$ der Widerstandswert für die Meßelektrode 3, jeweils ermittelt mit einer Dreipunktmessung, und $R_{23}$ der mit der Hilfe einer Zweipunktmessung ermittelte Widerstandswert der Meßelektroden 2 und 3 zusammen ist.

Die tatsächlich vorliegenden Widerstandswerte $R_2$ und $R_3$ müssen für eine verläßliche Leitfähigkeitsbestimmung in etwa gleich groß sein. Liegt das Verhältnis von $R_2$ zu $R_3$ nicht innerhalb eines vorgegebenen oder einstellbaren Intervalls um 1 herum (z. B. 0,8 - 1,2), so muß von einer kritischen Belegung einer der Meßelektroden 2, 3 ausgegangen werden. Jedenfalls gilt in diesem Fall, daß eine der Meßelektroden 2, 3 stärker belegt ist als die andere. In einem solchen Fall wird eine Statusmeldung "Elektrodenbelegung" vom magnetisch-induktiven Durchflußmeßgerät ausgegeben.

Sind, wie in Fig. 1 gezeigt, bei dem magnetisch-induktiven Durchflußmeßgerät vier Elektroden 2, 3, 4, 5 vorhanden, nämlich die beiden Meßelektroden 2, 3, eine Referenzelektrode 4 und die Füllstandsüberwachungselektrode 5, so kann eine zusätzliche Diagnose über die Referenzelektrode 4 und die Füllstandsüberwachungselektrode 5 erfolgen. Liegt der mittels einer Zweipunktmessung zwischen der Referenzelektrode 4 und der Füllstandsüberwachungselektrode 5 ermittelte Widerstandswert für die Referenzelektrode 4 und die Füllstandsüberwachungselektrode 5 zusammen in einem vorgegebenen oder einstellbaren Intervall um die Summe aus den Widerstandswerten für die Meßelektrode 2 und die Meßelektrode 3 herum, so herrscht Normalbetrieb - es ist alles in Ordnung. Ist der Widerstandswert für die Referenzelektrode 4 und die Füllstandsüberwachungselektrode 5 zusammen jedoch wesentlich größer als die Summe aus dem Widerstandswert für die Meßelektrode 2 und dem Widerstandswert für die Meßelektrode 3, so ist das Meßrohr 1 im allgemeinen nicht vollständig gefüllt und es wird die Statusmeldung "Rohr nicht voll" ausgegeben. Die gleiche Statusmeldung wird ausgegeben, wenn der Widerstandswert für die Referenzelektrode 4 und die Füllstandsüberwachungselektrode 5 zusammen einen absoluten vorgegebenen oder einstellbaren Schwellwert überschreitet. Wird dieser absolute Schwellwert auch durch die Widerstandswerte für die Meßelektrode 2 und die Meßelektrode 3 überschritten, wird die Statusmeldung "Rohr leer" ausgegeben.

Ist weiterhin der Widerstandswert für die Referenzelektrode 4 und die Füllstandsüberwachungselektrode 5 zusammen um einen vorbestimmten Betrag kleiner als die Summe aus den Widerstandswerten für die Meßelektrode 2 und die Meßelektrode 3, so wird davon ausgegangen, daß eine Elektrodenleckage vorliegt und sich Flüssigkeit hinter der Referenzelektrode 4 gesammelt hat. Damit wird der Widerstand für die Referenzelektrode 4 geringer als erwartet, da sich die Oberfläche vergrößert hat. In diesem Fall wird die Statusmeldung "Elektrodenleckage" ausgegeben.

Insgesamt gilt, daß jede Statusmeldung über einen Statusausgang, aber auch über eine lokale Anzeige oder/und eine digitale Schnittstelle des magnetisch-induktiven Durchflußmeßgeräts ausgegeben werden kann. Weiterhin gilt vorliegend, daß die Widerstandsmessungen nicht gleichzeitig, sondern nacheinander vorgenommen werden. Bei den vier vorgesehenen Elektroden - Meßelektrode 2, Meßelektrode 3, Referenzelektrode 4 und Füllstandsüberwachungselektrode 5 - werden also z. B. nacheinander der Widerstand der Meßelektrode 2, der Widerstand der Meßelektrode 3 und der Widerstand der Referenzelektrode 4 und der Füllstandsüberwachungselektrode 5 zusammen bestimmt. Dabei wird für jeden Widerstandswert eine Mittelung oder eine Tiefpaßfilterung vorgenommen.

Wie weiter oben schon ausgeführt, kann insbesondere bei magnetisch-induktiven Durchflußmeßgeräten mit langen Zuleitungen vorgesehen sein, daß die Zuleitungen zu den Elektroden 2, 3, 4, 5 jeweils mit einer elektrisch mitgeführten Abschirmung versehen sind, so daß der Einfluß von Kabelkapazitäten reduziert werden kann, indem die Abschirmung mit dem Potential der jeweiligen Elektroden 2, 3, 4, 5 mitgeführt wird.

Ein ganz wesentlicher Punkt ist, daß die Meßfrequenz für die Widerstandsmessung bei dem vorliegend beschriebenen bevorzugten Ausführungsbeispiel der Erfindung größer ist als die Meßfrequenz für die Durchflußmessung. Die Meßfrequenz für die Widerstandsmessung liegt ja vorzugsweise im Bereich zwischen 100 und 500 Hz, während die Frequenz für die Durchflußmessung typischerweise ihre obere Grenze im Bereich von 100 Hz hat. Es ist somit z. B. ein Betrieb denkbar, bei dem die Meßfrequenz im Bereich von 200 Hz liegt, während die Durchflußmessung mit einer Frequenz im Bereich von 50 Hz durchgeführt wird. Dabei werden die beiden Frequenzen zeitlich miteinander synchronisiert.

Bei den vorliegend unter Bezugnahme auf die Zeichnung beschriebenen bevorzugten Ausführungsbeispielen der Erfindung ist außerdem vorgesehen, daß die Durchflußmessung während der Widerstandsmessungen ausgesetzt wird. Insbesondere ist nämlich vorgesehen, daß die Widerstandsmessung in den Umschaltphasen des periodisch alternierenden, rechteckförmigen Magnetfelds erfolgt. Schließlich gilt auch, daß die Spannungsmessung phasenstarr zum eingeprägten Strom erfolgt. Es kann daher ein reeller Widerstandsanteil und ein imaginärer unterschieden werden. Ausgewertet wird der Betrag oder der reelle Widerstandsanteil.

**Patentansprüche**

1. Verfahren zum Betreiben eines magnetisch-induktiven Durchflußmeßgeräts, wobei das Durchflußmeßgerät ein von einem elektrisch leitfähigen Medium durchströmtes Meßrohr (1), wenigstens zwei mit dem Medium in galvanisch leitendem Kontakt stehende Elektroden (2, 3) und wenigstens eine Magnetspule (6) aufweist, mit der ein das Medium wenigstens teilweise durchsetzendes Magnetfeld erzeugt wird, wobei zwischen zwei mit dem strömenden Medium in benetzendem Kontakt stehenden Elektroden (2, 3) ein vorbestimmter Strom eingeprägt wird, die Spannung gemessen wird, die zwischen den beiden Elektroden (2, 3) oder einer der beiden Elektroden (2, 3) und einer anderen mit dem strömenden Medium in benetzendem Kontakt stehenden Elektrode (4, 5) anliegt, und aus dem Verhältnis von eingeprägtem Strom zu gemessener Spannung ein Widerstandswert ermittelt wird, **dadurch gekennzeichnet, daß** zwei Elektroden als Meßelektroden (2, 3) vorgesehen sind und eine weitere Elektrode als Referenzelektrode (4) oder als Füllstandsüberwachungselektrode (5) vorgesehen ist, wobei der vorbestimmte Strom zwischen einer Meßelektrode (2) und der weiteren Elektrode (4, 5) eingeprägt, die dabei zwischen den Meßelektroden (2, 3) anliegende Spannung gemessen und aus dem Verhältnis von gemessener Spannung zu eingeprägtem Strom ein erster Widerstandswert ermittelt wird, der vorbestimmte Strom zwischen der anderen Meßelektrode (3) und der weiteren Elektrode (4, 5) eingeprägt, die dabei zwischen den Meßelektroden (2, 3) anliegende Spannung gemessen und aus dem Verhältnis von gemessener Spannung zu eingeprägtem Strom ein zweiter Widerstandswert ermittelt wird, das Verhältnis oder/und die Differenz des ersten Widerstandswertes zu dem zweiten Widerstandswert gebildet wird und eine kritische Belegung einer der beiden Meßelektroden (2, 3) festgestellt wird, wenn das gebildete Verhältnis bzw. die gebildete Differenz außerhalb eines vorbestimmten Wertebereichs liegt.

2. Verfahren nach Anspruch 1, **dadurch gekennzeichnet, daß** mit Hilfe des aus dem Verhältnis von eingeprägtem Strom zu gemessener Spannung ermittelten Widerstandswerts die Leitfähigkeit des durch das Meßrohr (1) strömenden Mediums ermittelt wird,

3. Verfahren nach Anspruch 2, **dadurch gekennzeichnet, daß** die Leitfähigkeit $K$ des durch das Meßrohr (1) strömenden Mediums mit Hilfe der Formel $K = c\, 1/R$ bestimmt wird, wobei $c$ eine Konstante und $R$ der mit Hilfe des aus dem Verhältnis von eingeprägtem Strom zu gemessener Spannung ermittelte Widerstandswert ist.

4. Verfahren nach einem der Ansprüche 1 bis 3, **dadurch gekennzeichnet, daß** eine Statusausgabe bezüglich der kritischen Belegung einer der beiden Meßelektroden (2, 3) erfolgt.

5. Verfahren nach einem der Ansprüche 1 bis 4, **dadurch gekennzeichnet, daß** die Abschirmungen der Zuleitungen zu den Elektroden (2, 3, 4, 5) elektrisch mit dem Potential der jeweiligen Elektrode (2, 3, 4, 5) mitgeführt werden, um den Einfluß von Kabelkapazitäten zu reduzieren.

6. Verfahren nach einem der Ansprüche 1 bis 5, **dadurch gekennzeichnet, daß** während der Bestimmung der Widerstandswerte keine Durchflußmessung erfolgt.

7. Verfahren nach Anspruch 6, **dadurch gekennzeichnet, daß** als Magnetfeld ein Wechselfeld oder ein geschaltetes Gleichfeld verwendet wird und die Bestimmung der Widerstandswerte in den Umschaltphasen des Magnetfelds erfolgt.

## Claims

1. A method for operating a manetoinductive flowmeter, said flowmeter incorporating a measuring tube (1) through which flows an electrically conductive medium, at least two electrodes (2, 3) that are in direct conductive contact with the medium, and at least one magnetic field coil (6) that serves to generate a magnetic field which permeates at least part of the medium, wherein a predefined current is impressed between two electrodes (2, 3) that are in wet contact with the flowing medium, the voltage present between the two electrodes (2, 3) or between one of the two electrodes (2, 3) and another electrode (4, 5) that is in wet contact with the flowing medium is measured, and a resistance value from the ratio of the impressed current to the measured voltage is derived
**characterized in**
two of the electrodes serve as measuring electrodes (2, 3) and an additional electrode serves as a reference electrode (4) or as a fill-level monitoring electrode (5), wherein the predefined current is impressed between one of the measuring electrodes (2, 3) and the additional electrode (4, 5), the voltage generated between the measuring electrodes (2, 3) is measured and a first resistance value is derived from the ratio of the impressed current to the measured voltage, the predefined current is impressed between the other measuring electrode (3) and the additional electrode (4, 5), the voltage generated between the measuring electrodes (2, 3) is measured and a second resistance value is derived from the ratio of the measured voltage to the impressed current, the ratio and/or difference between the first resistance value and the second resistance value and the second resistance is determined and a critical load on one of the two measuring electrodes (2, 3) is detected in the event that the said ratio or difference is outside a redefined quantitative range.

2. The method according to claim 1, **characterized in that** the conductivity of the medium flowing through the measuring tube (1) is determined with the aid of the resistance value derived from the ratio of the impressed current to the measured voltage.

3. The method according to claim 2, **characterized in that** the conductivity $K$ of the medium flowing through the measuring tube (1) is determined by applying the formula $K=c1/R$, where $c$ is a constant and $R$ is the resistance value derived from the ratio of the impressed current to the measured voltage.

4. The method according to any one of claims 1 to 3, **characterized in that** a status message is output relative to the critical load on one of the two measuring electrodes (2, 3).

5. The method according to any one of claims 1 to 4, **characterized in that** the shielding of the lead supplying the electrodes (2, 3, 4, 5) is electrically carried with the potential of the respective electrode (2, 3, 4, 5) so as to reduce the effect of cable capacitance.

6. The method according to any one of claims 1 to 5, **characterized in that** no flow measurement takes place while the resistance value is being derived.

7. The method according to claim 6, **characterized in that** an alternating field or a switched continuous field is employed as the magnetic field and the resistance value is derived during the switch-over phases of the magnetic field.

## Revendications

1. Procédé d'utilisation d'un débitmètre magnéto-inductif, le débitmètre présentant un tube de mesure (1) traversé par un courant de fluide électriquement conducteur, au moins deux électrodes (2, 3) qui se trouvent en contact galvaniquement conducteur avec le fluide et au moins une bobine magnétique (6) avec laquelle est généré un champ magnétique qui charge au moins partiellement le fluide, un courant prédéfini étant appliqué entre deux électrodes (2, 3) qui sont en contact par imprégnation avec le fluide qui s'écoule, la tension présente entre les deux électrodes (2, 3) ou l'une des deux électrodes (2, 3) et une autre électrode (4, 5) qui se trouve en contact par imprégnation avec le fluide qui s'écoule étant mesurée, et une valeur de résistance étant déterminée à partir du rapport entre le courant appliqué et la tension mesurée,
**caractérisé en ce**
**que** deux électrodes sont prévues comme électrodes de mesure (2, 3) et il est prévu une électrode supplémentaire en tant qu'électrode de référence (4) ou en tant qu'électrode de surveillance du niveau (5), le courant prédéfini étant appliqué entre une électrode de mesure (2) et l'électrode supplémentaire (4, 5), la tension ainsi présente entre les électrodes de mesure (2, 3) étant mesurée et une première valeur de résistance étant déterminée à partir du rapport entre la tension mesurée et le courant appliqué, le courant prédéfini étant appliqué entre l'autre électrode de mesure (3) et l'électrode supplémentaire (4, 5), la tension ainsi présente entre les électrodes de mesure (2, 3) étant mesurée et une deuxième valeur de résistance étant déterminée à partir du rapport entre la tension mesurée et le courant appliqué, le rapport et/ou la différence entre la première valeur de résistance et la deuxième valeur de résistance étant calculé et une occupation critique de l'une des deux électrodes de mesure (2, 3) étant définie lorsque le rapport calculé ou la différence calculée se trouve en-dehors d'une plage de valeurs prédéfinie.

2. Procédé selon la revendication 1, **caractérisé en ce que** la conductivité du fluide qui s'écoule à travers le tube de mesure (1) est déterminée à l'aide de la valeur de la résistance déterminée à partir du rapport entre le courant appliqué et la tension mesurée.

3. Procédé selon la revendication 2, **caractérisé en ce que** la conductivité du fluide K qui s'écoule à travers le tube de mesure (1) est déterminée à l'aide de la formule K = c 1/R, c étant une constante et R la valeur de la résistance déterminée à partir du rapport entre le courant appliqué et la tension mesurée.

4. Procédé selon l'une des revendications 1 à 3, **caractérisé en ce qu'**une indication d'état concernant l'occupation critique de l'une des deux électrodes de mesure (2, 3) a lieu.

5. Procédé selon l'une des revendications 1 à 4, **caractérisé en ce que** les blindages des lignes d'arrivée vers les électrodes (2, 3, 4, 5) accompagnent le potentiel de l'électrode (2, 3, 4, 5) correspondante afin de réduire l'influence des capacités des câbles.

6. Procédé selon l'une des revendications 1 à 5, **caractérisé en ce qu'**aucune mesure du débit n'a lieu pendant la détermination des valeurs de résistance.

7. Procédé selon la revendication 6, **caractérisé en ce que** le champ magnétique utilisé est un champ alterné ou un champ continu commuté et la détermination des valeurs de résistance s'effectue dans les phases d'inversion du champ magnétique.

Fig. 1

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2003051557 A1
- EP 0336615 A1
- US 6392416 B1
- JP 59174718 A